# EUROPEAN PATENT SPECIFICATION

(11) **EP 3 599 652 B1**
(45) Date of publication and mention of the grant of the patent: **10.11.2021**
(21) Application number: 19186706.8
(22) Date of filing: 17.07.2019
(51) Int. Cl.: H01M 50/502

(54) **ISOLATION BOARD ASSEMBLY AND BATTERY MODULE**
ISOLATIONSPLATTENANORDNUNG UND BATTERIEMODUL
ENSEMBLE DE CARTE D'ISOLATION ET MODULE DE BATTERIE

(30) Priority: 26.07.2018 CN 201810833960
(43) Date of publication of application: 29.01.2020
(73) Proprietor: Contemporary Amperex Technology Co., Limited, Jiaocheng District Ningde City, Fujian 352100 (CN)
(72) Inventor: WU, Buwei, Ningde, Fujian 352100 (CN); ZHANG, Le, Ningde, Fujian 352100 (CN); HUANG, Yincheng, Ningde, Fujian 352100 (CN); ZHOU, Linggang, Ningde, Fujian 352100 (CN); WANG, Derong, Ningde, Fujian 352100 (CN); ZOU, Huabin, Ningde, Fujian 352100 (CN)
(74) Representative: Manitz Finsterwald Patent- und Rechtsanwaltspartnerschaft mbB

(56) References cited:
- US-A1- 2014 256 178
- US-A1- 2015 171 405

## Description

### RELATED APPLICATIONS

The present application claims priority to Chinese patent application No. CN201810833960.4, filed on July 26, 2018.

### FIELD OF THE PRESENT INVENTION

The present invention relates to the field of battery technology, and particularly relates to an isolation board assembly and a battery module. The features of the preamble of the independent claim are known from US 2014/256178 A1 and US 2015/171405 A1.

### BACKGROUND OF THE PRESENT INVENTION

An isolation board assembly generally comprises an isolation board and an electrical connection piece, and the function of the isolation board is to limit the position of the electrical connection piece. However, the conventional isolation board assembly generally has the following problems: (1) most of the isolation boards can not provide a fixing force for the electrical connection piece in the height direction, thereby resulting in the risk that the electrical connection piece falls off under vibration; (2) although some isolation boards can provide a fixing force for the electrical connection piece in the height direction, it is necessary to place the electrical connection piece on the isolation board from up to down, and for the convenience of assembling, the fixing structure of the isolation board reserves a certain assembling space, thereby resulting in that the fixing reliability between the isolation board and the electrical connection piece is not high; (3) the overall structure of the isolation board assembly is complicated and the volume is large, which is not beneficial to reduce the cost.

### SUMMARY OF THE PRESENT INVENTION

In view of the problem existing in the background, an object of the present invention is to provide an isolation board assembly and a battery module, the assembling of the isolation board assembly is simple, which improves the assembling efficiency and ensures the fixing reliability between the isolation board and the electrical connection piece, and the volume of the isolation board assembly is small, when the isolation board assembly is applied to the battery module, it decreases the space of occupied by the isolation board assembly in the battery module, thereby improving the space utilization of the battery module. The present invention is defined in the independent claim.

It is provided an isolation board assembly, which comprises: an isolation board; and a plurality of electrical connection pieces, each electrical connection piece is fixed to the isolation board. The isolation board comprises: a plurality of supporting portions formed on both sides of the isolation board in a width direction, and multiple supporting portions on the same side of the isolation board in the width direction are spaced apart from each other in a length direction; and a plurality of first limiting portions, each first limiting portion and the corresponding supporting portion form an interval therebetween in a height direction. Each electrical connection piece comprises: a first end portion; and a second end portion disposed opposite to the first end portion in the width direction. The first end portion of each electrical connection piece is received in the corresponding interval, clamped and fixed by the corresponding first limiting portion and the corresponding supporting portion, and the second end portion of each electrical connection piece extends out of the corresponding supporting portion in the width direction.

The isolation board further comprises a plurality of second limiting portions in pairs, the two second limiting portions in each pair face each other and are used for limiting a movement of the corresponding electrical connection piece in the length direction, and each second limiting portion is formed above the corresponding supporting portion and protrudes from the corresponding supporting portion in the height direction.

Each second limiting portion comprises a L direction stopping wall positioned at an outer side of the corresponding electrical connection piece in the length direction and extending in the width direction, so as to limit the movement of the corresponding electrical connection piece in the length direction.

Each second limiting portion further comprises a W direction stopping wall formed on one end of the L direction stopping wall in the width direction and extending in a direction toward the first limiting portion facing the second limiting portion in the length direction, so as to limit a movement of the corresponding electrical connection piece in the width direction.

The isolation board further comprises a plurality of elastic latching members, each elastic latching member and the corresponding first limiting portion are spaced apart from each other in the height direction, and each elastic latching member is latched to the first end portion of the corresponding electrical connection piece.

Each electrical connection piece is provided with a through hole passing through the first end portion of the electrical connection piece in the height direction. Each elastic latching member comprises: a main body portion; and a latching portion protruding from the main body portion in the height direction. The main body portion of each elastic latching member and the corresponding first limiting portion clamp and fix the first end portion of the corresponding electrical connection piece, and the latching portion of each elastic latching member is latched to the corresponding electrical connection piece via the through hole of the corresponding electrical connection piece.

The isolation board further comprises: a bottom wall; and two side walls formed on both sides of the bottom wall in the width direction, the two side walls and the bottom wall form a wiring groove, and each supporting portion and each first limiting portion are formed on an outer side of the corresponding side wall in the width direction. The isolation board assembly further comprises multiple sampling harnesses received and fixed in the wiring groove of the isolation board, and one end of each sampling harness is fixedly connected with the corresponding electrical connection piece.

The isolation board further comprises a plurality of third limiting portions formed above the bottom wall and spaced apart from each other in the length direction, a clamping groove is formed between each third limiting portion and the bottom wall, and the clamping groove is provided to allow the multiple sampling harnesses to pass through and constrain the multiple sampling harnesses.

The side wall of the isolation board is formed with a plurality of openings, each opening is provided for the one end of the corresponding sampling harness to pass through the side wall to be fixedly connected with the corresponding electrical connection piece. The isolation board further comprises a plurality of fourth limiting portions each formed above the corresponding supporting portion and protruding from the corresponding supporting portion in the height direction, each fourth limiting portion is positioned at an outer side of the corresponding opening in the width direction, each fourth limiting portion and the corresponding supporting portion form a channel to allow the one end of the corresponding sampling harness to pass through.

It is provided a battery module, which comprises: a plurality of batteries arranged side by side in the length direction, and each battery comprises two electrode terminals spaced apart from each other in the width direction; and the isolation board assembly described above, the isolation board of the isolation board assembly is fixed between the two electrode terminals of the battery, and the second end portion of each electrical connection piece is fixed to the electrode terminal of the corresponding battery.

The present invention has the following beneficial effects: in the process of assembling the isolation board assembly, based on the structure of the isolation board, the first end portion of each electrical connection piece can be directly inserted into the interval formed between the corresponding first limiting portion and the corresponding supporting portion from one side of the isolation board in the width direction. Such an assembly manner is simple and fast, which improves the assembling efficiency. Because the first end portion of each electrical connection piece is clamped and fixed by the corresponding first limiting portion and the corresponding supporting portion of the isolation board, it ensures the fixing reliability between each electrical connection piece and the isolation board, and prevents each electrical connection piece falling off from the isolation plate. And because the first end portion of each electrical connection piece is supported on the corresponding supporting portion of the isolation board, and the second end portion of each electrical connection piece extends out of the corresponding supporting portion in the width direction, it makes the dimension of the isolation board in the width direction is small, thereby greatly decreasing the volume and weight of the isolation board.

### BRIEF DESCRIPTION OF THE DRAWINGS

FIG. 1 is a perspective view of a battery module according to the present invention.
FIG. 2 is an enlarged view of a part of FIG. 1 indicated by a circle.
FIG. 3 is a perspective view of the battery module of FIG. 1 with an isolation board assembly removed.
FIG. 4 is a perspective view of the isolation board assembly according to the present invention.
FIG. 5 is an enlarged view of a part of FIG. 4 indicated by a circle.
FIG. 6 is a perspective view of an isolation board of FIG. 4.
FIG. 7 is an enlarged view of a part of FIG. 6 indicated by a circle.
FIG. 8 is a perspective view of an electrical connection piece of FIG. 4.

Reference numerals are represented as follows:
1 battery
11 electrode terminal
2 isolation board assembly
21 isolation board
211 supporting portion
212 first limiting portion
213 second limiting portion
2131 L direction stopping wall
2132 W direction stopping wall
214 elastic latching member
2141 main body portion
2142 latching portion
215 bottom wall
216 side wall
2161 opening
217 third limiting portion
218 fourth limiting portion
219 fixing portion
2191 fixing hole
21A wiring groove
21B clamping groove
21C channel
22 electrical connection piece
221 first end portion
222 second end portion
223 through hole
224 extending portion
2241 penetrating hole
23 sampling harness
3 end plate
A binder
S fastener
L length direction
W width direction
H height direction

### DETAILED DESCRIPTION

Hereinafter an isolation board assembly and a battery module according to the present invention will be described in detail in combination with the figures.

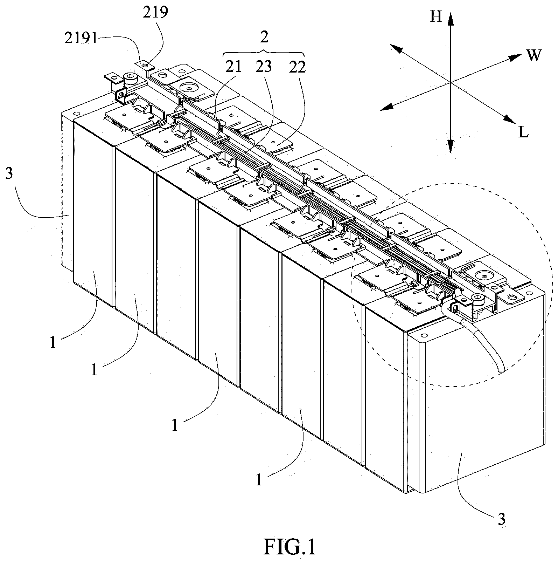

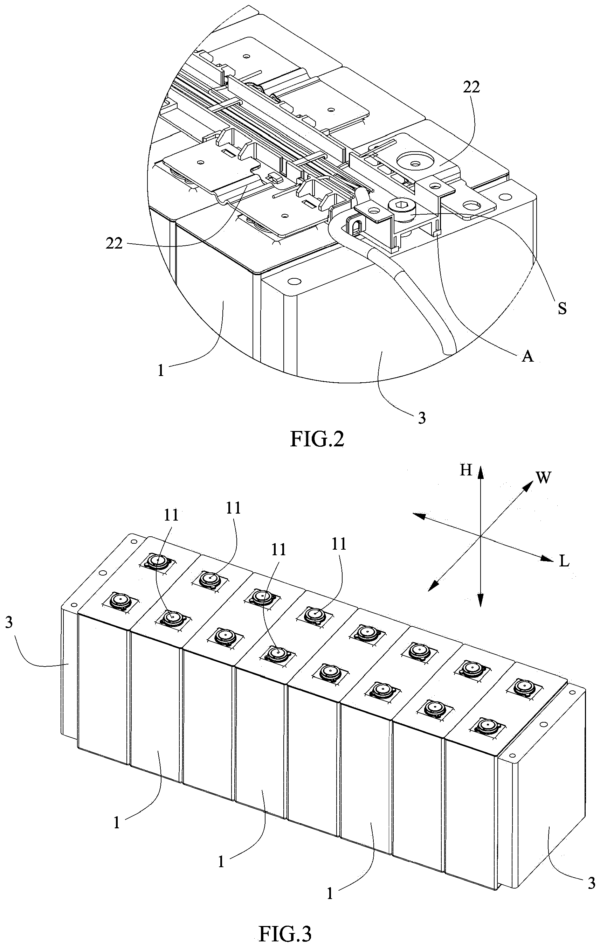

Referring to FIG. 1 to FIG. 3, a battery module according to the present invention comprises a plurality of batteries 1, an isolation board assembly 2, two end plates 3 and an upper cover (not shown).

The plurality of batteries 1 are arranged side by side in a length direction L, and each battery 1 comprises two electrode terminals 11 spaced apart from each other in a width direction W.

The two end plates 3 are respectively positioned at both ends of the plurality of batteries 1 in the length direction L. The two end plates 3 are used for clamping the plurality of batteries 1 in the length direction L.

Referring to FIG. 1, the isolation board assembly 2 comprises an isolation board 21, a plurality of electrical connection pieces 22 and multiple sampling harnesses 23. The isolation board assembly 2 is fixed to the plurality of batteries 1 through the isolation board 21, and each electrical connection piece 22 and each sampling harness 23 are fixed to the isolation board 21, and each electrical connection piece 22 is electrically connected to the electrode terminal 11 of the corresponding battery 1.

In order to achieve the fixing between the isolation board 21 and each battery 1, a bottom surface of the isolation board 21 may be bonded with each battery 1 by a binder A, and the isolation board 21 is fixedly connected with each end plate 3 by a fastener S (such as a bolt), thereby ensuring the fixing reliability between the isolation board 21 and each battery 1. Compared with the existing fixing manner of the isolation board assembly 2 (that is, fixing by using a latching structure provided on a side plate of the battery module), the manner in the present invention is simpler, and it does not need to provide the side plate with the latching structure in the battery module, thereby greatly simplifying the structure of the battery module, reducing the costs, and improving the assembling efficiency of the battery module.

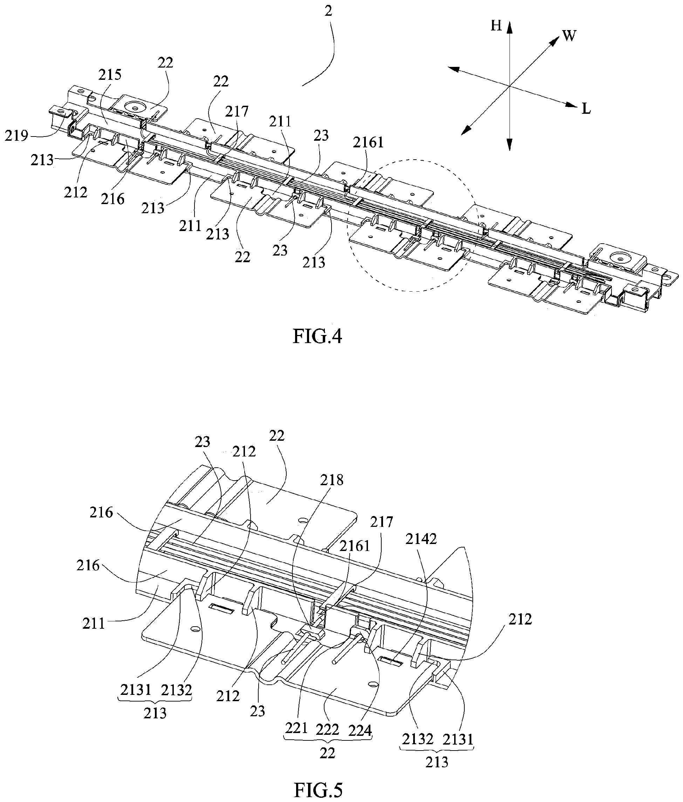

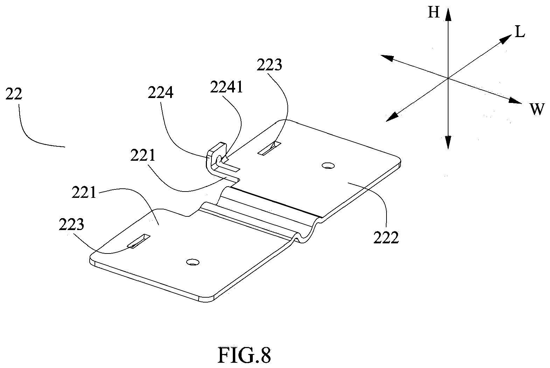

Referring to FIG. 4 to FIG. 7, the isolation board 21 may comprise: a plurality of supporting portions 211 formed on both sides of the isolation board 21 in the width direction W, and multiple supporting portions 211 on the same side of the isolation board 21 in the width direction W are spaced apart from each other in the length direction L; and a plurality of first limiting portions 212, each first limiting portion 212 and the corresponding supporting portion 211 form an interval therebetween in a height direction H. Referring to FIG. 4 and FIG. 8, each electrical connection piece 22 may comprise: a first end portion 221; and a second end portion 222 disposed opposite to the first end portion 221 in the width direction W.

In the process of assembling the isolation board assembly 2, based on the structure of the isolation board 21, the first end portion 221 of each electrical connection piece 22 can be directly inserted into the interval formed between the corresponding first limiting portion 212 and the corresponding supporting portion 211 from one side of the isolation board 21 in the width direction W. Such an assembly manner is simple and fast, thereby improving the assembling efficiency. After each electrical connection piece 22 and the isolation board 21 are assembled, the first end portion 221 of each electrical connection piece 22 is received in the corresponding interval, clamped and fixed by the corresponding first limiting portion 212 and the corresponding supporting portion 211, and the second end portion 222 of each electrical connection piece 22 extends out of the corresponding supporting portion 211 in the width direction W.

Because the first end portion 221 of each electrical connection piece 22 is clamped and fixed by the corresponding first limiting portion 212 and the corresponding supporting portion 211 of the isolation board 21, it ensures the fixing reliability between each electrical connection piece 22 and the isolation board 21, and prevents each electrical connection piece 22 falling off from the isolation plate 21. And because the first end portion 221 of each electrical connection piece 22 is supported on the corresponding supporting portion 211 of the isolation board 21, and the second end portion 222 of each electrical connection piece 22 extends out of the corresponding supporting portion 211 in the width direction W, it makes the dimension of the isolation board 21 in the width direction W small, thereby greatly decreasing the volume and the weight of the isolation board 21.

When the isolation board assembly 2 is assembled on the plurality of batteries 1, because the volume of the isolation board 21 is small, the isolation board 21 can be directly placed between the two electrode terminals 11 of each battery 1, meanwhile the second end portion 222 of each electrical connection piece 22 is positioned above the electrode terminal 11 of the corresponding battery 1 and fixed to the corresponding electrode terminal 11, therefore the space of occupied by the isolation board assembly 2 in the battery module is small, thereby improving the space utilization of the battery module and greatly reducing the costs.

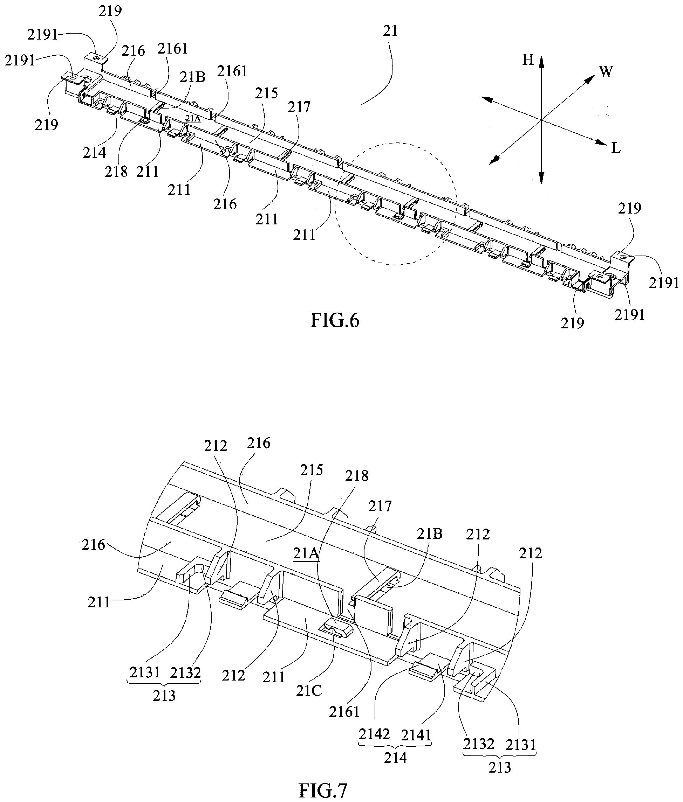

Referring to FIG. 4 and FIG. 6, because the dimension of the isolation board 21 in the width direction W is small, the isolation board 21 is formed in an elongated structure. Compared with the structure of the existing isolation board, the volume of the isolation board 21 in this structure is only one-third of the volume of the existing isolation board, thereby greatly reducing the cost of the isolation board assembly 2.

Referring to FIG. 4 to FIG. 7, the isolation board 21 may further comprise: a plurality of second limiting portions 213 in pairs, the two second limiting portions 213 in each pair face each other, and each second limiting portion 213 is formed above the corresponding supporting portion 211 and protrudes from the corresponding supporting portion 211 in the height direction H. After each electrical connection piece 22 and the isolation board 21 are assembled, the two second limiting portions 213 in each pair of the isolation board 21 are respectively positioned on both sides of the corresponding electrical connection piece 22 in the length direction L, thereby limiting a movement of each electrical connection piece 22 in the length direction L.

In order to ensure that the isolation board 21 can provide a sufficient fixing force for the first end portion 221 of each electrical connection piece 22 in the height direction H, each electrical connection piece 22 needs to be clamped and fixed by the first limiting portions 212 and the corresponding supporting portion 211. Specifically, referring to FIG. 5, four first limiting portions 212 may be provided between the two second limiting portions 213 in each pair and spaced apart from each other in the length direction L, and each four first limiting portion 212 and the corresponding supporting portion 211 clamp and fix the corresponding electrical connection piece 22.

Referring to FIG. 5 and FIG. 7, each second limiting portion 213 may comprise a L direction stopping wall 2131 positioned at an outer side of the corresponding electrical connection piece 22 in the length direction L and extending in the width direction W, so as to limit the movement of the corresponding electrical connection piece 22 in the length direction L.

Referring to FIG. 5 and FIG. 7 again, each second limiting portion 213 may further comprise a W direction stopping wall 2132 formed on one end of the L direction stopping wall 2131 in the width direction W and extending in a direction toward the first limiting portion 212 facing each second limiting portion 213 in the length direction L, so as to limit a movement of the corresponding electrical connection piece 22 in the width direction W.

Referring to FIG. 4 to FIG. 7, the isolation board 21 further comprises a plurality of elastic latching members 214, each elastic latching member 214 and the corresponding first limiting portion 212 are spaced apart from each other in the height direction H, and each elastic latching member 214 is latched to the corresponding electrical connection piece 22 to limit a movement of the corresponding electrical connection piece 22 in the height direction H and the width direction W.

Specifically, referring to FIG. 8, each electrical connection piece 22 is provided with a through hole 223 passing through the first end portion 221 of each electrical connection piece 22 in the height direction H. Referring to FIG. 4 to FIG. 7, each elastic latching member 214 comprises:
a main body portion 2141 extending in the width direction W; and a latching portion 2142 protruding from the main body portion 2141 in the height direction H. The main body portion 2141 of each elastic latching member 214 and the corresponding first limiting portion 212 clamp and fix the first end portion 221 of the corresponding electrical connection piece 22, and the latching portion 2142 is latched to the corresponding electrical connection piece 22 via the through hole 223 of the corresponding electrical connection piece 22.

In the process of assembling the isolation board assembly 2, when the first end portion 221 of each electrical connection piece 22 is inserted into the interval formed between the corresponding first limiting portion 212 and the corresponding supporting portion 211, the elastic latching member 214 is deflected downward and generates elastic deformation, and when the through hole 223 of each electrical connection piece 22 and the latching portion 2142 of the corresponding elastic latching member 214 are aligned with each other in the height direction H, the latching portion 2142 of the elastic latching member 214 is inserted into the corresponding through hole 223 so as to latch to the corresponding electrical connection piece 22, thereby limiting the movement of the corresponding electrical connection piece 22 in the width direction W. At this time, the elastic latching member 214 elastically restores, the main body portion 2141 of the elastic latching member 214 and the corresponding supporting portion 211 and the corresponding first limiting portion 212 clamps and fixes the corresponding electrical connection piece 22 in the height direction H, thereby limiting a movement of the corresponding electrical connection piece 22 in the height direction H.

It is noted that, in the isolation board assembly 2 according to the present invention, each first limiting portion 212 and the corresponding supporting portion 211 limit the movement of the corresponding electrical connection piece 22 in the height direction H, the two second limiting portions 213 in each pair limit the movement of the corresponding electrical connection piece 22 in the length direction L, and meanwhile the latching function between the latching portion 2142 of each elastic latching member 214 and the corresponding electrical connection piece 22 limit the movement of the corresponding electrical connection piece 22 in the width direction W, and the main body portion 2141 of each elastic latching member 214 and the corresponding supporting portion 211 and the corresponding first limiting portion 212 further limit the movement of the electrical connection piece 22 in the height direction H, and thus the movement of each electrical connection piece 22 in the six directions are limited, thereby greatly improving the fixing reliability between each electrical connection piece 22 and the isolation board 21.

Referring to FIG. 4 to FIG. 7, the isolation board 21 may further comprise: a bottom wall 215; and two side walls 216 formed on both sides of the bottom wall 215 in the width direction W, the two side walls 216 and the bottom wall 215 form a wiring groove 21A, and each supporting portion 211 and each first limiting portion 212 are formed on an outer side of the corresponding side wall 216 in the width direction W.

Referring to FIG. 4 and FIG. 5, the multiple sampling harnesses 23 are received and fixed in the wiring groove 21A of the isolation board 21, and one end of each sampling harness 23 is fixedly connected with the corresponding electrical connection piece 22.

Referring to FIG. 4 to FIG. 7, the isolation board 21 may further comprise: a plurality of third limiting portions 217 formed above the bottom wall 215 and spaced apart from each other in the length direction L, and a clamping groove 21B is formed between each third limiting portion 217 and the bottom wall 215. The clamping groove 21B is provided to allow the multiple sampling harnesses 23 to pass through and constrains the multiple sampling harnesses 23. Here, the clamping groove 21B not only collects the multiple sampling harnesses 23 but also optimizes the layout of the multiple sampling harnesses 23 in the isolation board 21 when each sampling harness 23 is fixed by the clamping groove 21B.

Referring to FIG. 4 to FIG. 7, each side wall 216 of the isolation board 21 may be formed with a plurality of openings 2161, each opening 2161 is provided for the one end of the corresponding sampling harness 23 to pass through the side wall 216 to be fixedly connected with the corresponding electrical connection piece 22.

In order to prevent an end portion of the sampling harness 23 close to the corresponding electrical connection piece 22 from shaking during the process of sampling, a clamping structure may be provided on the isolation board 21 of the isolation board assembly 2 and/or each electrical connection piece 22 to limit the shaking of the end portion of the sampling harness 23.

In an embodiment, referring to FIG. 4 to FIG. 7, the isolation board 21 may further comprise a plurality of fourth limiting portions 218 each formed above the corresponding supporting portion 211 and protruding from the corresponding supporting portion 211 in the height direction H, each fourth limiting portion 218 is positioned at an outer side of the corresponding opening 2161 in the width direction W, each fourth limiting portion 218 and the corresponding supporting portion 211 form a channel 21C to allow the one end of the corresponding sampling harness 23 to pass through. Here, each channel 21C formed on the isolation board 21 limits the shaking of the end portion of the corresponding sampling harness 23 close to the corresponding electrical connection piece 22 while the sampling harness 23 passes through the channel 21C.

Referring to FIG. 4 to FIG. 7 again, each fourth limiting portion 218 is formed on the corresponding supporting portion 211 in a cantilever manner, and a recess portion formed on one side of each fourth limiting portion 218 facing the corresponding supporting portion 211, and the recess portion and the corresponding supporting portion 211 form the channel 21C.

Referring to FIG. 8, each electrical connection piece 22 may further comprise an extending portion 224 protruding from the first end portion 221 in the height direction H, and the extending portion 224 is provided with a penetrating hole 2241 in the width direction W. The penetrating hole 2241 allows the corresponding sampling harness 23 to pass through, which assists in limiting the shaking of the end portion of the sampling harness 23 close to the corresponding electrical connection piece 22.

The multiple sampling harnesses 23 may comprise a plurality of voltage sampling harnesses and a plurality of temperature sampling harnesses. Each voltage sampling harness may be welded to the corresponding electrical connection piece 22, and each temperature sampling harness may be bonded to the corresponding electrical connection piece 22.

In order to facilitate fixation of the isolation board assembly 2 with other component in the battery module, referring to FIG. 4 to FIG. 7, the isolation board 21 may further comprise a fixing portion 219 extending in the width direction W from the top of each side wall 216 and provided with a fixing hole 2191 passing through the fixing portion 219 in the height direction H. The isolation board 21 may be fixedly connected with the other component (such as the upper cover of the battery module) in the battery module via the fixing hole 2191 and a fastener S (such as bolt).

Specifically, referring to FIG. 1 to FIG. 4, the fixing portion 219 may be formed on each end of each side wall 216 in the length direction L and extend in a direction away from the other side wall 216 in the width direction W.

## Claims

1. An isolation board assembly (2), comprising:
an isolation board (21);
a plurality of electrical connection pieces (22), each electrical connection piece (22) being fixed to the isolation board (21);
wherein
the isolation board (21) comprises: a plurality of supporting portions (211) formed on both sides of the isolation board (21) in a width direction (W), and multiple supporting portions (211) on the same side of the isolation board (21) in the width direction (W) are spaced apart from each other in a length direction (L); and a plurality of first limiting portions (212), each first limiting portion (212) and the corresponding supporting portion (211) form an interval therebetween in a height direction (H);
each electrical connection piece (22) comprises: a first end portion (221); and a second end portion (222) disposed opposite to the first end portion (221) in the width direction (W);
the first end portion (221) of each electrical connection piece (22) is received in the corresponding interval, clamped and fixed by the corresponding first limiting portion (212) and the corresponding supporting portion (211), and the second end portion (222) of each electrical connection piece (22) extends out of the corresponding supporting portion (211) in the width direction (W);
the isolation board (21) further comprises a plurality of elastic latching members (214), each elastic latching member (214) and the corresponding first limiting portion (212) are spaced apart from each other in the height direction (H), and each elastic latching member (214) is latched to the first end portion (221) of the corresponding electrical connection piece (22);
**characterized in that**
each electrical connection piece (22) is provided with a through hole (223) passing through the first end portion (221) of each electrical connection piece (22) in the height direction (H);
each elastic latching member (214) comprises: a main body portion (2141); and a latching portion (2142) protruding from the main body portion (2141) in the height direction (H);
the main body portion (2141) of each elastic latching member (214) and the corresponding first limiting portion (212) clamp and fix the first end portion (221) of the corresponding electrical connection piece (22), and the latching portion (2142) of each elastic latching member (214) is latched to the corresponding electrical connection piece (22) via the through hole (223) of the corresponding electrical connection piece (22).

2. The isolation board assembly (2) according to claim 1, wherein the isolation board further comprises a plurality of second limiting portions (213) in pairs, the two second limiting portions (213) in each pair face each other and are used for limiting a movement of the corresponding electrical connection piece (22) in the length direction (L), and each second limiting portion (213) is formed above the corresponding supporting portion (211) and protrudes from the corresponding supporting portion (211) in the height direction (H).

3. The isolation board assembly (2) according to claim 2, wherein each second limiting portion (213) comprises a L direction stopping wall (2131) positioned at an outer side of the corresponding electrical connection piece (22) in the length direction (L) and extending in the width direction (W), so as to limit the movement of the corresponding electrical connection piece (22) in the length direction (L).

4. The isolation board assembly (2) according to claim 3, wherein each second limiting portion (213) further comprises a W direction stopping wall (2132) formed on one end of the Ldirection stopping wall (2131) in the width direction (W) and extending in a direction toward the first limiting portion (212) facing the second limiting portion (213) in the length direction (L), so as to limit a movement of the corresponding electrical connection piece (22) in the width direction (W).

5. The isolation board assembly (2) according to claim 1, wherein
the isolation board (21) further comprises: a bottom wall (215); and two side walls (216) formed on both sides of the bottom wall (215) in the width direction (W), the two side walls (216) and the bottom wall (215) form a wiring groove (21A), and each supporting portion (211) and each first limiting portion (212) are formed on an outer side of the corresponding side wall (216) in the width direction (W);
the isolation board assembly (2) further comprises multiple sampling harnesses (23) received and fixed in the wiring groove (21A) of the isolation board (21), and one end of each sampling harness (23) is fixedly connected with the corresponding electrical connection piece (22).

6. The isolation board assembly (2) according to claim 5, wherein the isolation board (21) further comprises: a plurality of third limiting portions (217) formed above the bottom wall (215) and spaced apart from each other in the length direction (L), a clamping groove (21B) is formed between each third limiting portion (217) and the bottom wall (215), and the clamping groove (21B) is provided to allow the multiple sampling harnesses (23) to pass through and constrain the multiple sampling harnesses (23).

7. The isolation board assembly (2) according to claim 5, wherein
the side wall (216) of the isolation board (21) is formed with a plurality of openings (2161), each opening (2161) is provided for the one end of the corresponding sampling harness (23) to pass through the side wall (216) to be fixedly connected with the corresponding electrical connection piece (22);
the isolation board (21) further comprises a plurality of fourth limiting portions (218) each formed above the corresponding supporting portion (211) and protruding from the corresponding supporting portion (211) in the height direction (H), each fourth limiting portion (218) is positioned at an outer side of the corresponding opening (2161) in the width direction (W), each fourth limiting portion (218) and the corresponding supporting portion (211) form a channel (21C) to allow the one end of the corresponding sampling harness (23) to pass through.

8. A battery module, comprising:
a plurality of batteries (1) arranged side by side in the length direction (L), and each battery (1) comprising two electrode terminals (11) spaced apart from each other in the width direction (W);
wherein
the battery module further comprises the isolation board assembly (2) according to any one of claims 1-7, the isolation board (21) of the isolation board assembly (2) is fixed between the two electrode terminals (11) of each battery (1), and the second end portion (222) of each electrical connection piece (22) is fixed to the electrode terminal (11) of the corresponding battery (1).

## Patentansprüche

1. Isolierplattenanordnung (2), umfassend:
eine Isolierplatte (21);
eine Vielzahl von elektrischen Verbindungsstücken (22), wobei jedes elektrische Verbindungsstück (22) an der Isolierplatte (21) befestigt ist;
wobei
die Isolierplatte (21) umfasst: eine Vielzahl von Stützabschnitten (211), die auf beiden Seiten der Isolierplatte (21) in einer Breitenrichtung (W) ausgebildet sind, wobei mehrere Stützabschnitte (211) auf derselben Seite der Isolierplatte (21) in der Breitenrichtung (W) in einer Längenrichtung (L) voneinander beabstandet sind; und eine Vielzahl von ersten Begrenzungsabschnitten (212), wobei jeder erste Begrenzungsabschnitt (212) und der entsprechende Stützabschnitt (211) in einer Höhenrichtung (H) ein Intervall dazwischen bilden;
jedes elektrische Verbindungsstück (22) umfasst: einen ersten Endabschnitt (221); und einen zweiten Endabschnitt (222), der in Breitenrichtung (W) gegenüber dem ersten Endabschnitt (221) angeordnet ist;
der erste Endabschnitt (221) jedes elektrischen Verbindungsstücks (22) in dem entsprechenden Intervall aufgenommen ist, durch den entsprechenden ersten Begrenzungsabschnitt (212) und den entsprechenden Stützabschnitt (211) geklemmt und fixiert ist, und der zweite Endabschnitt (222) jedes elektrischen Verbindungsstücks (22) sich aus dem entsprechenden Stützabschnitt (211) in der Breitenrichtung (W) erstreckt;
die Isolierplatte (21) ferner eine Vielzahl von elastischen Verriegelungselementen (214) umfasst, wobei jedes elastische Verriegelungselement (214) und der entsprechende erste Begrenzungsabschnitt (212) in der Höhenrichtung (H) voneinander beabstandet sind, und jedes elastische Verriegelungselement (214) mit dem ersten Endabschnitt (221) des entsprechenden elektrischen Verbindungsstücks (22) verriegelt ist;
**dadurch gekennzeichnet, dass**
jedes elektrische Verbindungsstück (22) mit einem Durchgangsloch (223) versehen ist, das durch den ersten Endabschnitt (221) jedes elektrischen Verbindungsstücks (22) in der Höhenrichtung (H) verläuft;
jedes elastische Verriegelungselement (214) umfasst: einen Hauptkörperabschnitt (2141); und einen Verriegelungsabschnitt (2142), der von dem Hauptkörperabschnitt (2141) in der Höhenrichtung (H) vorsteht;
der Hauptkörperabschnitt (2141) jedes elastischen Verriegelungselements (214) und der entsprechende erste Begrenzungsabschnitt (212) den ersten Endabschnitt (221) des entsprechenden elektrischen Verbindungsstücks (22) klemmen und fixieren, und der Verriegelungsabschnitt (2142) jedes elastischen Verriegelungselements (214) über das Durchgangsloch (223) des entsprechenden elektrischen Verbindungsstücks (22) mit dem entsprechenden elektrischen Verbindungsstück (22) verriegelt ist.

2. Isolierplattenanordnung (2) nach Anspruch 1, wobei die Isolierplatte ferner eine Vielzahl von zweiten Begrenzungsabschnitten (213) in Paaren umfasst, wobei die zwei zweiten Begrenzungsabschnitte (213) in jedem Paar einander gegenüberliegen und zum Begrenzen einer Bewegung des entsprechenden elektrischen Verbindungsstücks (22) in der Längenrichtung (L) verwendet sind, und wobei jeder zweite Begrenzungsabschnitt (213) über dem entsprechenden Stützabschnitt (211) ausgebildet ist und von dem entsprechenden Stützabschnitt (211) in der Höhenrichtung (H) vorsteht.

3. Isolierplattenanordnung (2) nach Anspruch 2, wobei jeder zweite Begrenzungsabschnitt (213) eine Stoppwand (2131) in L-Richtung umfasst, die an einer Außenseite des entsprechenden elektrischen Verbindungsstücks (22) in der Längenrichtung (L) positioniert ist und sich in der Breitenrichtung (W) erstreckt, um die Bewegung des entsprechenden elektrischen Verbindungsstücks (22) in der Längenrichtung (L) zu begrenzen.

4. Isolierplattenanordnung (2) nach Anspruch 3, wobei jeder zweite Begrenzungsabschnitt (213) ferner eine Stoppwand (2132) in W-Richtung umfasst, die an einem Ende der Stoppwand (2131) in L-Richtung in der Breitenrichtung (W) ausgebildet ist und sich in einer Richtung zu dem ersten Begrenzungsabschnitt (212) hin erstreckt, der dem zweiten Begrenzungsabschnitt (213) in der Längenrichtung (L) gegenüberliegt, um eine Bewegung des entsprechenden elektrischen Verbindungsstücks (22) in der Breitenrichtung (W) zu begrenzen.

5. Isolierplattenanordnung (2) nach Anspruch 1, wobei die Isolierplatte (21) ferner umfasst: eine Bodenwand (215); und zwei Seitenwände (216), die auf beiden Seiten der Bodenwand (215) in der Breitenrichtung (W) ausgebildet sind, wobei die beiden Seitenwände (216) und die Bodenwand (215) eine Verdrahtungsnut (21A) bilden, und jeder Stützabschnitt (211) und jeder erste Begrenzungsabschnitt (212) auf einer Außenseite der entsprechenden Seitenwand (216) in der Breitenrichtung (W) ausgebildet sind;
die Isolierplattenbaugruppe (2) ferner mehrere Abtastkabelbäume (23) umfasst, die in der Verdrahtungsnut (21A) der Isolierplatte (21) aufgenommen und befestigt sind, und ein Ende jedes Abtastkabelbaums (23) fest mit dem entsprechenden elektrischen Verbindungsstück (22) verbunden ist.

6. Isolierplattenanordnung (2) nach Anspruch 5, wobei die Isolierplatte (21) ferner umfasst: eine Vielzahl von dritten Begrenzungsabschnitten (217), die oberhalb der Bodenwand (215) ausgebildet sind und in der Längenrichtung (L) voneinander beabstandet sind, eine Klemmnut (21B) zwischen jedem dritten Begrenzungsabschnitt (217) und der Bodenwand (215) ausgebildet ist und die Klemmnut (21B) vorgesehen ist, um den Durchgang der mehreren Abtastkabelbäume (23) zu ermöglichen und die mehreren Abtastkabelbäume (23) einzuschränken.

7. Isolierplattenanordnung (2) nach Anspruch 5, wobei die Seitenwand (216) der Isolierplatte (21) mit einer Vielzahl von Öffnungen (2161) ausgebildet ist, wobei jede Öffnung (2161) dafür vorgesehen ist, dass das eine Ende des entsprechenden Abtastkabelbaums (23) durch die Seitenwand (216) hindurchgeht, um fest mit dem entsprechenden elektrischen Verbindungsstück (22) verbunden zu sein;
die Isolierplatte (21) ferner eine Vielzahl von vierten Begrenzungsabschnitten (218) umfasst, die jeweils oberhalb des entsprechenden Stützabschnitts (211) ausgebildet sind und von dem entsprechenden Stützabschnitt (211) in der Höhenrichtung (H) vorstehen, jeder vierte Begrenzungsabschnitt (218) an einer Außenseite der entsprechenden Öffnung (2161) in der Breitenrichtung (W) positioniert ist, und jeder vierte Begrenzungsabschnitt (218) und der entsprechende Stützabschnitt (211) einen Kanal (21C) bilden, um zu ermöglichen, dass das eine Ende des entsprechenden Abtastkabelbaums (23) hindurchgeht.

8. Batteriemodul, umfassend:
eine Vielzahl von Batterien (1), die in Längenrichtung (L) nebeneinander angeordnet sind, wobei jede Batterie (1) zwei Elektrodenanschlüsse (11) aufweist, die in Breitenrichtung (W) voneinander beabstandet sind;
wobei
das Batteriemodul ferner die Isolierplattenbaugruppe (2) nach einem der Ansprüche 1-7 umfasst, die Isolierplatte (21) der Isolierplattenbaugruppe (2) zwischen den beiden Elektrodenanschlüssen (11) jeder Batterie (1) befestigt ist und der zweite Endabschnitt (222) jedes elektrischen Verbindungsstücks (22) an dem Elektrodenanschluss (11) der entsprechenden Batterie (1) befestigt ist.

## Revendications

1. Ensemble plaque d'isolation (2), comprenant :
une plaque d'isolation (21) ;
une pluralité de pièces de connexion électrique (22), chaque pièce de connexion électrique (22) étant fixée à la plaque d'isolation (21) ;
dans lequel
la plaque d'isolation (21) comprend : une pluralité de parties de support (211) formées sur les deux côtés de la plaque d'isolation (21) dans une direction de largeur (W), et de multiples parties de support (211) sur le même côté de la plaque d'isolation (21) dans la direction de largeur (W) sont espacées les unes des autres dans une direction de longueur (L) ; et une pluralité de premières parties de limitation (212), chaque première partie de limitation (212) et la partie de support correspondante (211) forment un intervalle entre elles dans une direction de hauteur (H) ;
chaque pièce de connexion électrique (22) comprend : une première partie d'extrémité (221) ; et une deuxième partie d'extrémité (222) disposée à l'opposé de la première partie d'extrémité (221) dans la direction de largeur (W) ;
la première partie d'extrémité (221) de chaque pièce de connexion électrique (22) est reçue dans l'intervalle correspondant, serrée et fixée par la première partie de limitation correspondante (212) et la partie de support correspondante (211), et la deuxième partie d'extrémité (222) de chaque pièce de connexion électrique (22) s'étend hors de la partie de support correspondante (211) dans la direction de largeur (W) ;
la plaque d'isolation (21) comprend en outre une pluralité d'éléments de verrouillage élastiques (214), chaque élément de verrouillage élastique (214) et la première partie de limitation correspondante (212) sont espacés les uns des autres dans la direction de hauteur (H), et chaque élément de verrouillage élastique (214) est verrouillé sur la première partie d'extrémité (221) de la pièce de connexion électrique correspondante (22) ;
**caractérisé en ce que**
chaque pièce de connexion électrique (22) est pourvue d'un trou traversant (223) passant à travers la première partie d'extrémité (221) de chaque pièce de connexion électrique (22) dans la direction de hauteur (H) ;
chaque élément de verrouillage élastique (214) comprend : une partie corps principal (2141) ; et une partie de verrouillage (2142) faisant saillie de la partie corps principal (2141) dans la direction de hauteur (H) ;
la partie corps principal (2141) de chaque élément de verrouillage élastique (214) et la première partie de limitation correspondante (212) serrent et fixent la première partie d'extrémité (221) de la pièce de connexion électrique correspondante (22), et la partie de verrouillage (2142) de chaque élément de verrouillage élastique (214) est verrouillée sur la pièce de connexion électrique correspondante (22) via le trou traversant (223) de la pièce de connexion électrique correspondante (22).

2. Ensemble plaque d'isolation (2) selon la revendication 1, dans lequel la plaque d'isolation comprend en outre une pluralité de deuxièmes parties de limitation (213) par paires, les deux deuxièmes parties de limitation (213) de chaque paire se font face et sont utilisées pour limiter un mouvement de la pièce de connexion électrique correspondante (22) dans la direction de longueur (L), et chaque deuxième partie de limitation (213) est formée au-dessus de la partie de support correspondante (211) et fait saillie de la partie de support correspondante (211) dans la direction de hauteur (H).

3. Ensemble plaque d'isolation (2) selon la revendication 2, dans lequel chaque deuxième partie de limitation (213) comprend une paroi d'arrêt de direction L (2131) positionnée sur un côté extérieur de la pièce de connexion électrique correspondante (22) dans la direction de longueur (L) et s'étendant dans la direction de largeur (W), de manière à limiter le mouvement de la pièce de connexion électrique correspondante (22) dans la direction de longueur (L).

4. Ensemble plaque d'isolation (2) selon la revendication 3, dans lequel chaque deuxième partie de limitation (213) comprend en outre une paroi d'arrêt de direction W (2132) formée sur une extrémité de la paroi d'arrêt de direction L (2131) dans la direction de largeur (W) et s'étendant dans une direction allant vers la première partie de limitation (212) faisant face à la deuxième partie de limitation (213) dans la direction de longueur (L), de manière à limiter un mouvement de la pièce de connexion électrique correspondante (22) dans la direction de largeur (W).

5. Ensemble plaque d'isolation (2) selon la revendication 1, dans lequel
la plaque d'isolation (21) comprend en outre : une paroi inférieure (215) ; et deux parois latérales (216) formées sur les deux côtés de la paroi inférieure (215) dans la direction de largeur (W), les deux parois latérales (216) et la paroi inférieure (215) forment une rainure de câblage (21A), et chaque partie de support (211) et chaque première partie de limitation (212) sont formées sur un côté extérieur de la paroi latérale correspondante (216) dans la direction de largeur (W) ;
l'ensemble plaque d'isolation (2) comprend en outre de multiples faisceaux d'échantillonnage (23) reçus et fixés dans la rainure de câblage (21A) de la plaque d'isolation (21), et une extrémité de chaque faisceau d'échantillonnage (23) est connectée de manière fixe à la pièce de connexion électrique correspondante (22).

6. Ensemble plaque d'isolation (2) selon la revendication 5, dans lequel la plaque d'isolation (21) comprend en outre : une pluralité de troisièmes parties de limitation (217) formées au-dessus de la paroi inférieure (215) et espacées les unes des autres dans la direction de longueur (L), une rainure de serrage (21B) est formée entre chaque troisième partie de limitation (217) et la paroi inférieure (215), et la rainure de serrage (21B) est prévue pour permettre aux multiples faisceaux d'échantillonnage (23) de passer à travers et contraindre les multiples faisceaux d'échantillonnage (23).

7. Ensemble plaque d'isolation (2) selon la revendication 5, dans lequel
la paroi latérale (216) de la plaque d'isolation (21) est formée avec une pluralité d'ouvertures (2161), chaque ouverture (2161) est prévue pour qu'une extrémité du faisceau d'échantillonnage correspondant (23) passe à travers la paroi latérale (216) pour être connectée de manière fixe à la pièce de connexion électrique correspondante (22) ;
la plaque d'isolation (21) comprend en outre une pluralité de quatrièmes parties de limitation (218) formées chacune au-dessus de la partie de support correspondante (211) et faisant saillie de la partie de support correspondante (211) dans la direction de hauteur (H), chaque quatrième partie de limitation (218) est positionnée sur un côté extérieur de l'ouverture correspondante (2161) dans la direction de largeur (W), chaque quatrième partie de limitation (218) et la partie de support correspondante (211) forment un canal (21C) pour permettre à une extrémité du faisceau d'échantillonnage correspondant (23) de passer à travers.

8. Module de batteries, comprenant :
une pluralité de batteries (1) disposées côte à côte dans la direction de longueur (L), et chaque batterie (1) comprenant deux bornes d'électrode (11) espacées l'une de l'autre dans la direction de largeur (W) ;
dans lequel
le module de batteries comprend en outre l'ensemble plaque d'isolation (2) selon l'une quelconque des revendications 1 à 7, la plaque d'isolation (21) de l'ensemble plaque d'isolation (2) est fixée entre les deux bornes d'électrode (11) de chaque batterie (1) et la deuxième partie d'extrémité (222) de chaque pièce de connexion électrique (22) est fixée à la borne d'électrode (11) de la batterie correspondante (1).
